# EUROPEAN PATENT APPLICATION

(11) **EP 4 746 084 A1**
(43) Date of publication of application: **20.05.2026**
(21) Application number: 24214674.4
(22) Date of filing: 22.11.2024
(51) Int. Cl.: H01M 8/04089, H01M 8/2432, H01M 8/2457, H01M 8/2475, H01M 8/2483, H01M 8/2484, H01M 8/12

(54) **SOLID OXIDE STACK WITH OPEN AIR EXHAUST**

(30) Priority: 19.11.2024 KR 20240165496
(71) Applicant: Korea Institute of Energy Research, Daejeon 34129 (KR)
(72) Inventor: KIM, Sun-dong, 30126 Sejong-si (KR); CHOI, Yoonseok, 30127 Sejong-si (KR); PARK, Hunmin, 34022 Daejeon (KR); LEE, Seul Hee, 34033 Daejeon (KR); HWANG, Hyo Jung, 35304 Daejeon (KR); PARK, Sang Shin, 34130 Daejeon (KR)
(74) Representative: Sander, Rolf

(57) **Abstract**

Disclosed is a solid oxide stack. The solid oxide stack according to one embodiment of the present invention includes a module formed by stacking a plurality of unit cells, and upper and lower manifolds installed at the top and bottom of the module, respectively. Each unit cell comprises a cell frame with a central opening, an air electrode current collector, a solid oxide cell, and a fuel electrode current collector sequentially stacked and seated within the central opening; an interconnect formed on the cell frame, having an air flow channel on one surface and a fuel flow channel on the opposite surface; a cell sealant located at the interface between the cell frame and the solid oxide cell; and a fuel electrode sealant located at the interface between the cell frame and the interconnect. The module is formed with air inlets and fuel inlets/outlets penetrating vertically through its top and bottom, allowing air to flow into the air flow channel through the upper or lower manifold and exit through an air outlet formed as an open structure on one side of the module.

## Description

### BACKGROUND

The present invention relates to a solid oxide stack with an open air exhaust.

Solid oxide stacks (Solid Oxide Stacks) are electrochemical devices that include solid oxide fuel cells (SOFCs) and solid oxide electrolysis cells (SOECs), both of which are high-temperature systems based on solid electrolytes. SOFCs and SOECs operate on complementary principles, playing critical roles in various energy conversion and storage applications.

SOFCs generate electricity and heat simultaneously by oxidizing fuels, operating primarily at high temperatures (700-1000°C) and supporting a wide range of fuels such as natural gas, hydrogen, and biogas. An SOFC is composed of a fuel electrode (cathode), an air electrode (anode), and a solid electrolyte. At the fuel electrode, fuel reacts with oxygen ions to generate electricity, and the heat produced during this process can be utilized for additional energy, offering exceptionally high efficiency. The solid electrolyte, typically made of materials like yttria-stabilized zirconia (YSZ), provides excellent thermal resistance and ionic conductivity.

SOECs operate on the reverse principle of SOFCs, using electrical energy to split water into hydrogen and oxygen. SOECs are utilized primarily at high temperatures (700-900°C) to produce high-purity hydrogen through water electrolysis, offering greater efficiency compared to traditional methods. These solid oxide electrolysis devices are well-suited for hydrogen production powered by renewable energy, serving as a key component in energy conversion and storage technologies.

Both SOFCs and SOECs share a structural similarity, comprising an electrolyte, a fuel electrode (hydrogen-generating electrode), and an air electrode (oxygen-generating electrode). The solid electrolyte facilitates ionic conduction, enabling efficient electrochemical reactions. While SOFCs convert fuel into electrical energy and heat, SOECs use electrical energy to split water, highlighting their complementary functionalities. Despite these differences, both utilize a common stack structure, reflecting their technological convergence.

For the operation of solid oxide stacks, auxiliary equipment is often required in addition to the stack itself. For instance, systems for pressure regulation, including pressure control systems, safety valves, compressors, and pressure sensors, may be included for pressurized operation. These auxiliary devices play a critical role in maintaining consistent pressure within the stack and ensuring system safety. Furthermore, gas distribution devices such as external manifolds are essential for certain stack types, controlling and evenly distributing gas flows to optimize system performance.

Although auxiliary devices are crucial for optimizing the performance and ensuring the stability of SOFCs and SOECs, they also contribute to increased system complexity and installation costs. Minimizing auxiliary components can reduce initial setup and maintenance expenses, simplify system design and operation, and save installation space. Additionally, it decreases the likelihood of system failure, improving overall reliability and stability. Reducing auxiliary equipment also helps lower energy losses and boosts overall energy efficiency. Furthermore, it facilitates the miniaturization and modularization of devices, which is particularly advantageous for small-scale hydrogen production facilities or applications in confined spaces.

### SUMMARY

The objective of the present invention is to provide a solid oxide stack with a novel structure that minimizes the auxiliary devices required during operation.

Another objective of the present invention is to provide a solid oxide stack with a novel structure that allows for the individual replacement of defective or aged cells within the stack.

An embodiment of the present invention provides a solid oxide stack comprising a module formed by stacking a plurality of unit cells, where each unit cell includes a cell frame with a central opening, an air electrode current collector, a solid oxide cell, and a fuel electrode current collector sequentially stacked and seated within the central opening, an interconnect formed on the cell frame with an air flow channel on one surface and a fuel flow channel on the opposite surface, a cell sealant positioned at the interface between the cell frame and the solid oxide cell, and a fuel electrode sealant positioned at the interface between the cell frame and the interconnect. The module includes an air inlet and a fuel inlet/outlet penetrating vertically, wherein air flows through the upper manifold or lower manifold into the air inlet, passes through the air flow channel, and is discharged through an air exhaust formed open on one side of the module.

In an embodiment, fuel or steam flows through the upper manifold or lower manifold into the fuel inlet/outlet, passes through the fuel flow channel, and is discharged through another fuel inlet/outlet to the upper manifold or lower manifold.

In an embodiment, no sealant is formed between adjacent modules within the stack.

In an embodiment, an insulator is positioned between adjacent unit cells.

In an embodiment, the solid oxide stack further comprises a chamber accommodating the solid oxide stack therein.

In one embodiment, the stack performs pressurized operation by controlling the pressure at the fuel supply section or steam supply section and the chamber-air supply section during operation of the solid oxide stack.

### BRIEF DESCRIPTION OF THE FIGURES

The accompanying drawings are included to provide a further understanding of the inventive concept, and are incorporated in and constitute a part of this specification. The drawings illustrate exemplary embodiments of the inventive concept and, together with the description, serve to explain principles of the inventive concept. In the drawings:
FIG. 1 is a schematic perspective view of a solid oxide stack according to the first embodiment of the present invention.
FIG. 2 is a schematic exploded perspective view of a solid oxide stack according to the first embodiment of the present invention.
FIG. 3 is a schematic plan view of the cell frame of a solid oxide stack according to the first embodiment of the present invention.
FIGS. 4 and 5 are schematic plan and rear views of the interconnect of a solid oxide stack according to the first embodiment of the present invention.
FIG. 6 is a schematic perspective view of a solid oxide stack according to the second embodiment of the present invention.
FIG. 7 is a schematic exploded perspective view of a solid oxide stack according to the second embodiment of the present invention.
FIG. 8 is a schematic plan view of the cell frame of a solid oxide stack according to the second embodiment of the present invention.
FIGS. 9 and 10 are schematic plan and rear views of the interconnect of a solid oxide stack according to the second embodiment of the present invention.
FIG. 11 is a reference diagram illustrating the process of replacing a unit cell when one becomes aged or defective in the solid oxide stack according to the first embodiment of the present invention.
FIG. 12 is a reference diagram illustrating the process of replacing a unit cell when one becomes aged or defective in the solid oxide stack according to the second embodiment of the present invention.
FIGS. 13 and 14 are a schematic perspective view and an exploded perspective view of a conventional solid oxide stack.

### DETAILED DESCRIPTION

The various embodiments of the present invention, along with their structures and the effects derived therefrom, are described in detail below with reference to the accompanying drawings. In the explanation of the present invention, well-known functionalities or configurations that may unnecessarily obscure the essence of the invention to those skilled in the art are omitted.

Throughout the patent document, when one part is described as being "connected (attached, contacted, coupled)" to another part, it includes both cases where the connection is "direct" and where it is "indirect" with an intermediary component in between. Furthermore, when a part is described as "including" a component, unless otherwise explicitly stated, it does not exclude other components but rather allows for additional components to be included.

The terms used in this patent document are intended only to describe specific embodiments and are not intended to limit the invention. Singular expressions include plural meanings unless the context explicitly dictates otherwise. Terms such as "include" or "have" are intended to specify the presence of features, numbers, steps, operations, components, parts, or combinations thereof described in the specification but do not preclude the possibility of the presence or addition of one or more other features, numbers, steps, operations, components, parts, or combinations thereof.

The solid oxide stack of the present invention is a device that operates at high temperatures (700°C to 1000°C) using a solid oxide electrolyte with oxygen or hydrogen ion conductivity. The solid oxide stack of the present invention can be utilized as a fuel cell or an electrolysis device.

A solid oxide fuel cell typically consists of an oxygen-ion-conducting electrolyte, an air electrode (anode), and a fuel electrode (cathode) positioned on either side of the electrolyte. At the air electrode, oxygen ions are generated through the reduction of oxygen and migrate through the electrolyte to the fuel electrode. At the fuel electrode, the oxygen ions react with hydrogen supplied to produce water, during which electrons are generated at the fuel electrode and consumed at the air electrode. Connecting the two electrodes produces an electric current.

In contrast, an electrolysis device operates by applying electrical energy to decompose water into hydrogen and oxygen at high temperatures. Specifically, in the electrolysis device, water is oxidized at the anode to produce oxygen (O₂), hydrogen ions (H⁺), and electrons. At the cathode, hydrogen ions gain electrons to form hydrogen (H₂) gas. This process simultaneously produces hydrogen and oxygen, with the overall reaction being the conversion of water (H₂O) into hydrogen (H₂) and oxygen (O₂). In high-temperature solid oxide electrolysis devices, oxygen ions (O²⁻) migrate through the electrolyte, facilitating efficient reactions and maintaining high current density and stability at elevated temperatures.

For clarity, the description below is based on terminology and processes relevant to fuel cells. However, it should be noted that the present invention is also applicable to electrolysis devices.

The embodiments of the present invention will now be described in detail with reference to the accompanying drawings.

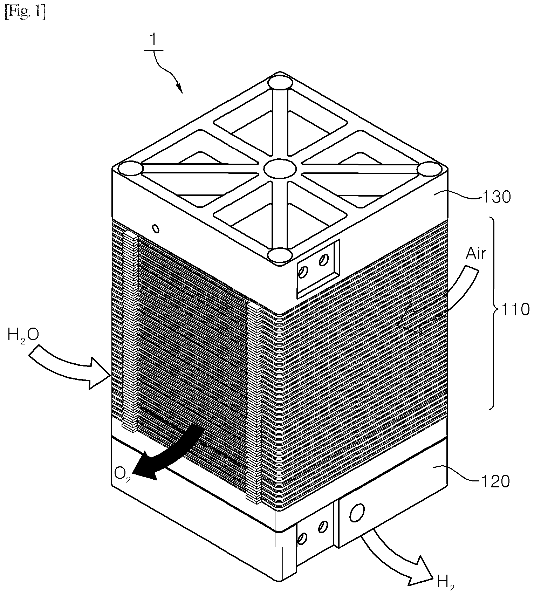

FIG. 1 is a schematic perspective view of a solid oxide stack (1) according to the first embodiment of the present invention.

Referring to FIG. 1, the solid oxide stack (1) according to the first embodiment of the present invention includes a module (110) where fuel cell or electrolysis reactions occur, and lower and upper manifolds (120 and 130) located at the bottom and top of the module (110), respectively. In the module (110), components are stacked vertically, connecting the fuel conduits from top to bottom. Fuel enters and exits the stack through the lower manifold (120) or upper manifold (130). The solid oxide stack (1) according to the first embodiment of the present invention may be housed within a chamber (not shown).

The module (110) of the solid oxide stack (1) according to the first embodiment of the present invention features an open air electrode structure, where an air (oxygen) inlet is formed on one side, and an air (oxygen) outlet is formed on the opposite side. An external manifold is installed on the side of the module (110) where the air (oxygen) inlet is located, to control and evenly distribute the flow of gas entering the air (oxygen) inlet.

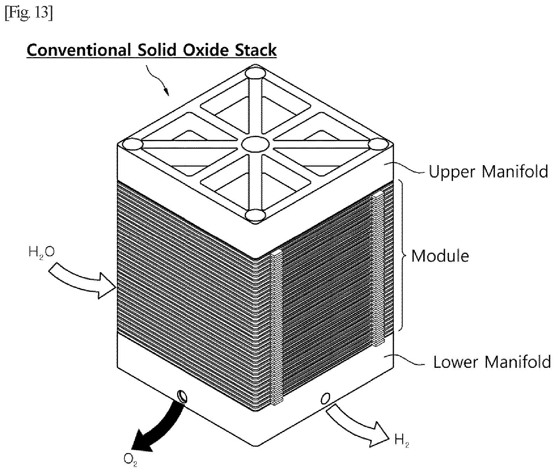

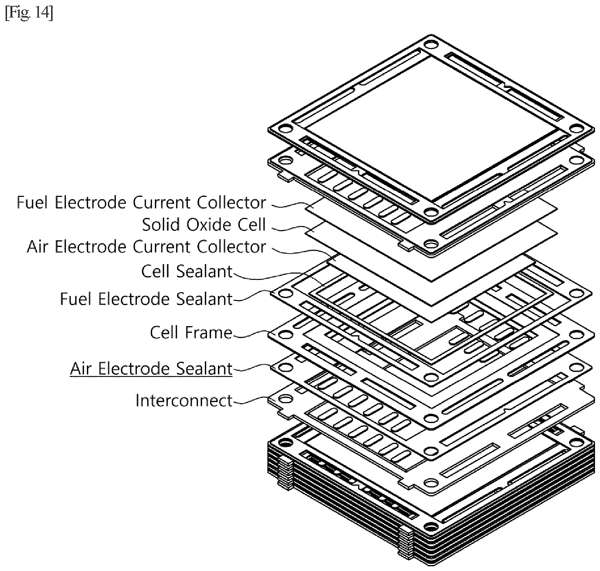

In contrast, FIGS. 13 and 14 illustrate conventional solid oxide stacks with a sealed structure. In such sealed solid oxide stacks, pressurized operation is conducted by increasing the pressure on both the fuel electrode (or hydrogen-generating electrode) side and the air electrode (or oxygen-generating electrode) side during operation. To prevent the mixing of hydrogen and oxygen, the pressure on the fuel electrode (or hydrogen-generating electrode) side and the air electrode (or oxygen-generating electrode) side must be controlled equally. Additionally, if the pressure increases, there is a risk of hydrogen and air leaking outside the stack. Therefore, the pressure inside the chamber surrounding the stack must also be controlled. This approach, which involves controlling the pressure on the fuel electrode (or hydrogen-generating electrode) side, the air electrode (or oxygen-generating electrode) side, and the interior of the chamber, is referred to as a three-point pressurization method.

However, the solid oxide stack (1) according to the first embodiment of the present invention has an air inlet and outlet open on one side of the module, allowing the pressure on the air supply section and the chamber to be controlled by a single pressure control unit. This enables a two-point pressurization method during operation, involving the fuel supply section (or steam supply section) and the chamber-air supply section. Unlike conventional sealed solid oxide stacks that require a three-point pressurization method (fuel supply section or steam supply section, air supply section, and chamber), the solid oxide stack of the present invention reduces the number of pressure control units needed by adopting a two-point pressurization method (fuel supply section or steam supply section, and chamber-air supply section).

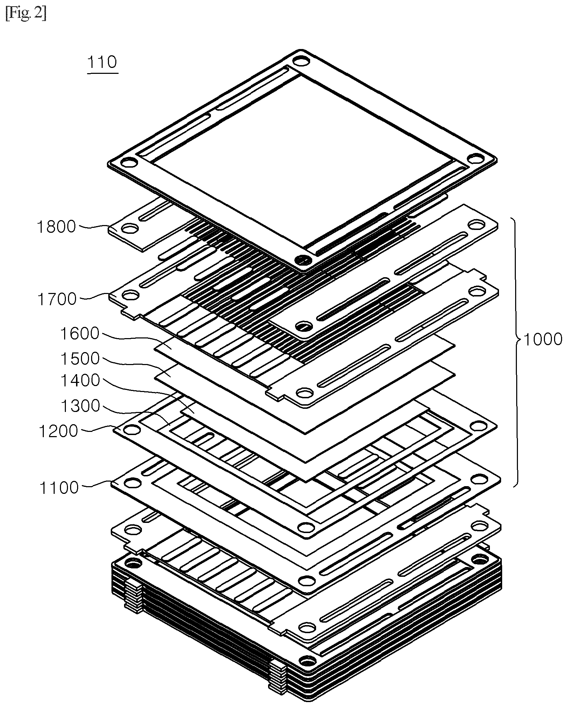

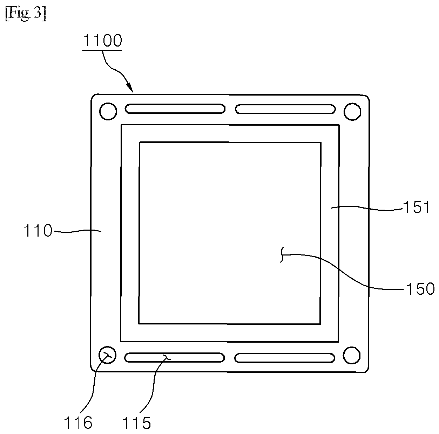

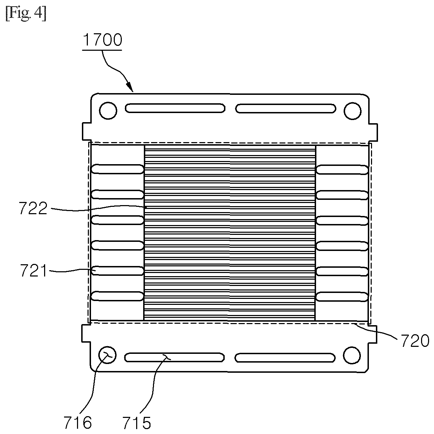

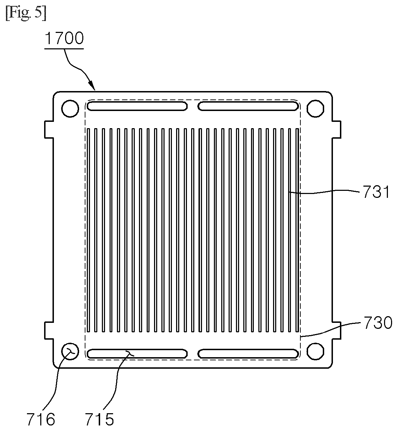

FIG. 2 is a schematic exploded perspective view of the solid oxide stack according to the first embodiment of the present invention. FIG. 3 is a schematic plan view of the cell frame of the solid oxide stack according to the first embodiment of the present invention. FIGS. 4 and 5 are schematic plan and rear views of the interconnect of the solid oxide stack according to the first embodiment of the present invention. The structure of the solid oxide stack according to one embodiment of the present invention is described with reference to FIG. 2, while differences from conventional solid oxide stacks are clarified with reference to FIGS. 13 and 14.

Referring to FIG. 2, the module (110) of the solid oxide stack (1) according to the first embodiment of the present invention comprises a cell frame (1100), a fuel electrode sealant (1200), a cell sealant (1300), an air electrode current collector (1400), a solid oxide cell (1500), a fuel electrode current collector (1600), an interconnect (1700), and an insulator (1800).

The cell frame (1100) includes a central opening (150). Around the central opening (150), guides (151) are formed to accommodate and seat the air electrode current collector (1400), the solid oxide cell (1500), and the fuel electrode current collector (1600). Through the central opening, the central portion of the lower surface of the air electrode current collector (1400) is exposed towards the interconnect (1700) positioned below, while the upper surface of the air electrode current collector (1400) contacts the solid oxide cell (1500). The opposite surface of the solid oxide cell (1500) is configured to contact the fuel electrode current collector (1600).

The solid oxide cell (1500) includes a fuel electrode and an air electrode, with a dense electrolyte located between the fuel electrode and the air electrode. The solid oxide cell (1500) may be a rectangular planar cell. The electrolyte must have a dense structure to prevent mixing of fuel and gas, exhibit high oxygen ion conductivity, and have low electronic conductivity. The electrolyte material may include at least one selected from ceria-based or lanthanum gallate-based materials.

The material of the cathode (fuel electrode) in the planar cell may be a composite of an ion-conductive electrolyte material with one selected from nickel, nickel alloys, copper, copper alloys, and iron-based alloys. The ion-conductive electrolyte material may include one or more selected from yttria-stabilized zirconia (YSZ), scandia-stabilized zirconia (ScSZ), gadolinium-doped ceria (GDC), samarium-doped ceria (SDC), and lanthanum gallates. The ion-conductive electrolyte material may also include Y₂O₃-doped zirconia or zirconia doped with Y, Sc, or Yb; ceria doped with Y, Gd, or Sm; and LaGaO₃ doped with Sr and Mg.

The material of the anode (air electrode) may be selected from ceramics and composites of ceramics and ion-conductive electrolyte materials. The ceramic material may include one or more selected from strontium titanium ferrite (STF), lanthanum strontium ferrite (LSF), lanthanum strontium cobaltite (LSC), strontium cobalt ferrite (SFC), barium strontium cobalt ferrite (BSCF), lanthanum strontium cobalt ferrite (LSCF), and lanthanum nickelate (LNO). The ion-conductive electrolyte material for the anode may include one or more selected from zirconia doped with Y, Sc, or Yb; ceria doped with Y, Gd, or Sm; and LaGaO₃ doped with Sr and Mg.

Referring to FIG. 3, fuel inlet/outlet ports (115) are formed on the edges (110) of the cell frame (1100). The fuel inlet/outlet ports (115) are vertically connected as the components of the module are stacked. Specifically, the fuel inlet and outlet are formed at opposing corners among the four corners of the cell frame (1100). On the other hand, in the solid oxide stack (1) according to the first embodiment, no separate air inlet/outlet ports are formed on the edges of the cell frame (1100) because air enters and exits through the sides of the module (110).

At the corners of the edges (110) of the cell frame (1100), fixing holes (116) are formed through which fixing bars pass to secure the stacked modules. For example, the stack can be secured by inserting fixing bars into the fixing holes (116) and tightening them with nuts and bolts.

At the interface where the cell frame (1100) and the solid oxide cell (1500) contact, a cell sealant (1300) is positioned. The cell sealant (1300) can be selected from at least one material in a group consisting of glass, mica, and glass-mica hybrid materials. However, the present invention is not limited to the materials used for sealing, and other materials or methods that achieve a sealing effect can also be employed.

On the upper side of the cell frame (1100), a fuel electrode sealant (1200) is formed. The fuel electrode sealant (1200) joins the cell frame (1100) and the interconnect (1700). A central opening is formed in the fuel electrode sealant (1200), accommodating the fuel electrode current collector (1600), which is positioned to contact one surface of the solid oxide cell (1500). Like the cell frame, the edges of the fuel electrode sealant (1200) are also equipped with fixing holes.

The fuel electrode sealant (1200) can be selected from at least one material in a group consisting of glass, mica, and glass-mica hybrid materials. However, the present invention is not limited to the materials used for sealing, and other materials or methods that achieve a sealing effect can also be employed.

On one surface of the interconnect (1700) (see FIG. 4), an air flow channel is formed, while on the opposite surface (see FIG. 5), a fuel flow channel is formed. At the edges of the interconnect (1700), fuel inlet/outlet ports (715) are formed, and at the corners, fixing holes (716) are provided for securing the stacked modules with supporting bars.

Referring to FIG. 4, the air flow channel (720) is described. The air flow channel (720) is open to at least one side of the module (110). As shown in FIG. 4, it may be open to both one side and the opposite side of the module (110). The air flow channel (720) is formed by machining a portion of one surface of the interconnect (1700), with ribs (721) and a first partition wall (722) protruding from the machined surface. The air flow channel can be formed as an elongated, unidirectional passage.

Referring to FIG. 5, the fuel flow channel (730) is described. The fuel flow channel (730) is formed on the rear surface of the interconnect (1700) and guides the flow of fuel to and from the fuel electrode of the solid oxide cell (1500). The fuel flow channel (730) includes a second partition wall (731), which is elongated in one direction to allow fuel entering from one fuel inlet (715) to exit through the opposite fuel outlet (715). The air flow channel and the fuel flow channel may be oriented in different directions (e.g., perpendicular to each other).

The cell frame (1100), fuel electrode sealant (1200), cell sealant (1300), air electrode current collector (1400), solid oxide cell (1500), fuel electrode current collector (1600), and interconnect (1700) collectively constitute a single unit cell (1000). The module (110) of the solid oxide stack (1) according to the first embodiment is formed by stacking multiple such unit cells (1000). Between each unit cell (1000), there is no sealing, and an insulator (1800) is positioned. The insulator (1800) may be formed by coating an insulating material on the interconnect (1700).

In conventional planar SOFC stacks, a sealing structure is essential to isolate the flow of air (or oxygen) through the air electrode (or oxygen electrode) flow channel from the flow of hydrogen through the fuel electrode (or hydrogen-generating electrode) flow channel. Solid oxide stacks with such sealing structures are referred to as sealed solid oxide stacks. In sealed solid oxide stacks, reaction gases such as hydrogen or methane (or steam) and air are introduced through external gas inlets, and gas flow is established along channels that penetrate vertically through the stack, connecting the fuel electrode (or hydrogen-generating electrode) and the air electrode (or oxygen electrode).

The sealing technologies for SOFCs and SOECs generally fall into three primary methods. The first method utilizes glass-based sealants that melt at high temperatures and bond irreversibly. While this method is widely used, it has the disadvantage of being non-detachable after bonding. The second method employs mechanical compression using mica or metal rings, which allows for detachment. However, this method is not suitable for commercialization due to the risk of gas leakage and increased costs. The third method involves brazing, which achieves metallurgical bonding between metals through melting at high temperatures. Although effective, this method is irreversible and increases process costs.

Due to their irreversible nature, both the glass-based sealant method and the brazing method make it difficult to replace individual defective or aged cells within the stack. On the other hand, the method using mica or metal rings allows for cell replacement but is unsuitable for large-scale commercialization.

As shown in the comparison between FIG. 2 and FIG. 14, unlike conventional solid oxide stacks, the module (110) of the solid oxide stack (1) according to the first embodiment of the present invention does not utilize an air electrode sealant. It is important to note that the insulator (1800) used in the present invention is distinct from the air electrode sealant. Unlike sealants, the insulator (1800) is not permanently bonded to at least the adjacent unit cells (1000).

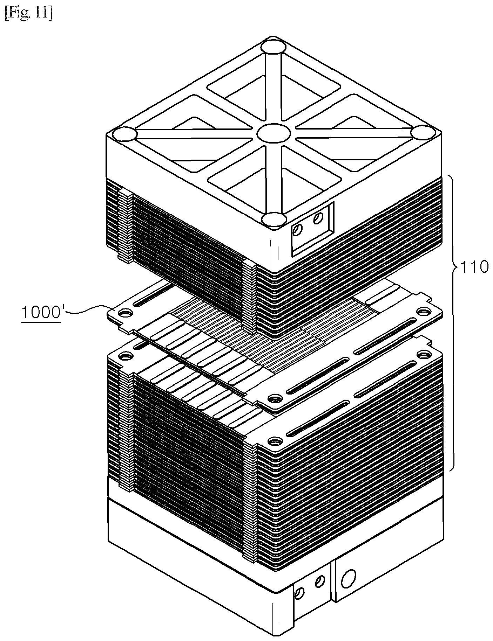

As such, as shown in FIG. 11, if at least one unit cell (1000') of the plurality of unit cells (1000) constituting the module (110) becomes aged or defective, it is possible to replace only the defective or aged unit cell (1000'). Specifically, if a unit cell (1000') becomes aged or defective, the fixing device securing the stacked stack can be removed, the aged or defective unit cell can be extracted, a new unit cell can be inserted, and the fixing device can be reassembled to complete the replacement.

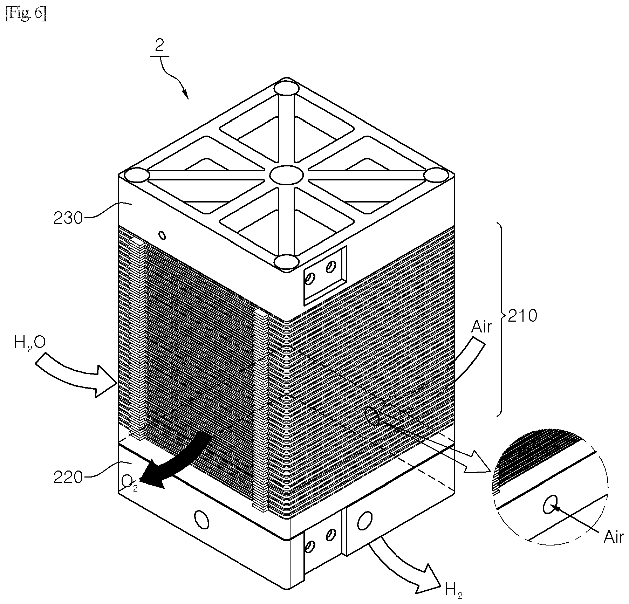

FIG. 6 is a schematic perspective view of the solid oxide stack (2) according to the second embodiment of the present invention.

Referring to FIG. 6, the solid oxide stack (2) according to the second embodiment of the present invention includes a module (210), where fuel cell or electrolysis reactions occur, and lower and upper manifolds (220 and 230) located at the bottom and top of the module (210), respectively. In the module (210), components are stacked vertically, connecting the fuel conduits from top to bottom. Fuel enters and exits the stack through the lower manifold (220) or upper manifold

(230). Additionally, air (or oxygen) is introduced through the lower manifold (220) or upper manifold (230). The solid oxide stack (2) according to the second embodiment of the present invention may also be housed within a chamber (not shown).

The module (210) of the solid oxide stack (2) according to the second embodiment of the present invention features an open air electrode structure, with an air (oxygen) outlet formed on one side of the module.

Unlike the first embodiment, the solid oxide stack (2) according to the second embodiment does not require an external manifold, as air (or oxygen) is introduced through the lower manifold (220) or upper manifold (230).

Furthermore, the solid oxide stack (2) of the second embodiment has an air outlet open on one side of the module, allowing the pressure of the air supply section and the chamber to be controlled by a single pressure control unit. This enables a two-point pressurization method during operation, consisting of a pressure control unit for the fuel supply section (or steam supply section) and a pressure control unit for the chamber-air supply section. In contrast to the three-point pressurization method (fuel supply section or steam supply section, air supply section, and chamber) required for pressurized operation in conventional sealed solid oxide stacks, the second embodiment reduces the number of required pressure control units by employing a two-point pressurization method (fuel supply section or steam supply section, and chamber-air supply section).

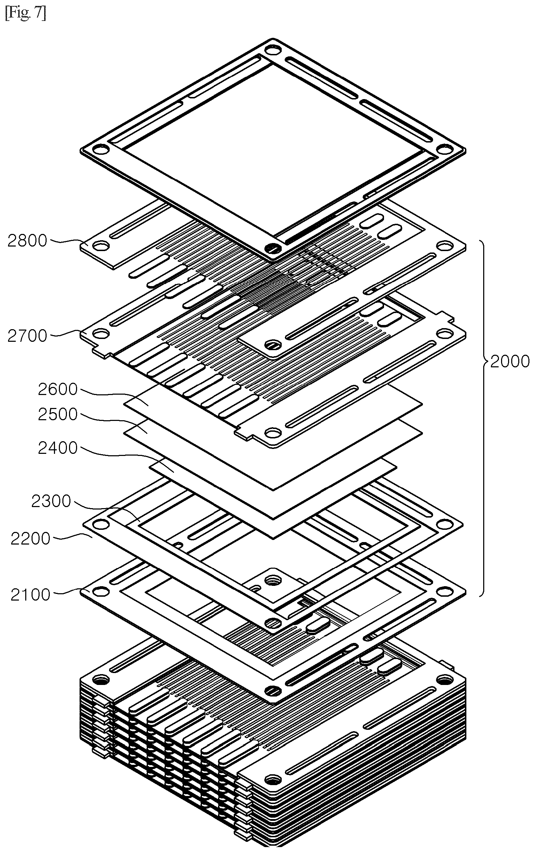

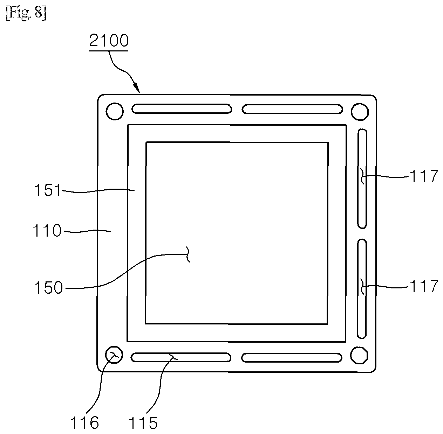

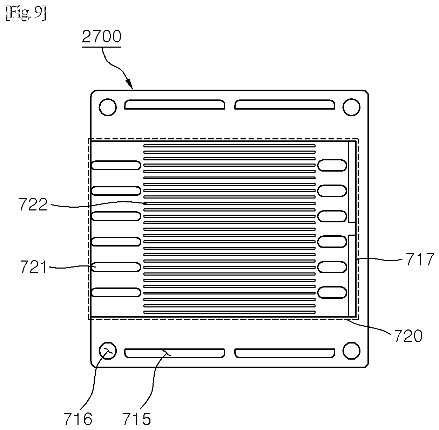

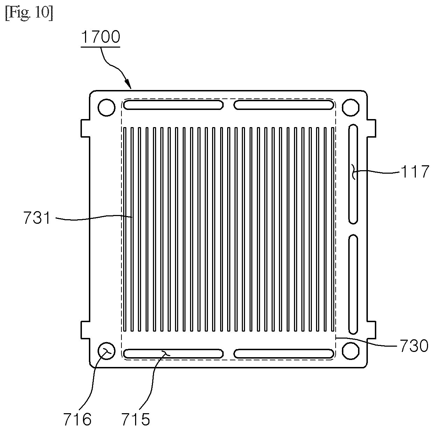

FIG. 7 is a schematic exploded perspective view of the solid oxide stack according to the second embodiment of the present invention. FIG. 8 is a schematic plan view of the cell frame of the solid oxide stack according to the second embodiment. FIGS. 9 and 10 are schematic plan and rear views of the interconnect of the solid oxide stack according to the first embodiment. The structure of the solid oxide stack according to an embodiment of the present invention is described with reference to FIG. 7, and its differences from conventional solid oxide stacks are clarified with reference to FIGS. 13 and 14.

Referring to FIG. 7, the module (210) of the solid oxide stack (2) according to the second embodiment includes a cell frame (2100), a fuel electrode sealant (2200), a cell sealant (2300), an air electrode current collector (2400), a solid oxide cell (2500), a fuel electrode current collector (2600), an interconnect (2700), and an insulator (2800).

The cell frame (2100) has a central opening (150). Guides (151) are formed around the central opening (150) to seat the air electrode current collector (2400), the solid oxide cell (2500), and the fuel electrode current collector (2600). Through the central opening, the central portion of the lower surface of the air electrode current collector (2400) is exposed toward the interconnect (2700) positioned below, while the upper surface of the air electrode current collector (2400) contacts the solid oxide cell (2500). The opposite surface of the solid oxide cell (2500) is configured to contact the fuel electrode current collector (2600).

The solid oxide cell (2600) includes a fuel electrode and an air electrode, with a dense electrolyte positioned between them. The solid oxide cell (2600) may be a rectangular planar cell. The electrolyte must have a dense structure to prevent the mixing of fuel and gas, exhibit high oxygen ion conductivity, and have low electronic conductivity. The electrolyte material may include at least one selected from ceria-based or lanthanum gallate-based materials.

The material of the cathode (fuel electrode) in the planar cell may be a composite of an ion-conductive electrolyte material and one material selected from nickel, nickel alloys, copper, copper alloys, and iron-based alloys. The ion-conductive electrolyte material may include one or more selected from yttria-stabilized zirconia (YSZ), scandia-stabilized zirconia (ScSZ), gadolinium-doped ceria (GDC), samarium-doped ceria (SDC), and lanthanum gallates. The electrolyte material may also include Y₂O₃-doped zirconia or zirconia doped with Y, Sc, or Yb; ceria doped with Y, Gd, or Sm; and LaGaO₃ doped with Sr and Mg.

The material of the anode (air electrode) may be selected from ceramics and composites of ceramics and ion-conductive electrolyte materials. The ceramic material may include one or more selected from strontium titanium ferrite (STF), lanthanum strontium ferrite (LSF), lanthanum strontium cobaltite (LSC), strontium cobalt ferrite (SFC), barium strontium cobalt ferrite (BSCF), lanthanum strontium cobalt ferrite (LSCF), and lanthanum nickelate (LNO). The ion-conductive electrolyte material for the anode may include one or more selected from zirconia doped with Y, Sc, or Yb; ceria doped with Y, Gd, or Sm; and LaGaO₃ doped with Sr and Mg.

Referring to FIG. 8, fuel inlet/outlet ports (115) are formed on the edges (110) of the cell frame (2100). The fuel inlet/outlet ports (115) are vertically connected as the components of the module are stacked. Additionally, air inlets (117) are formed on other edges (110) of the cell frame (2100). The air inlets (117) are also vertically connected as the components of the module are stacked. For the fuel inlet/outlet ports (115), opposing corners of the four corners of the cell frame (2100) are formed with a fuel inlet channel and a fuel outlet channel, respectively. For the air inlets (117), only one corner among the four corners of the cell frame (2100) has an air inlet channel, as the air exits directly through one side of the module (210).

At the corners of the edges (110) of the cell frame (2100), fixing holes (116) are formed, through which fixing bars pass to secure the stacked modules. For example, the stack can be secured by inserting fixing bars into the fixing holes (116) and tightening them with nuts and bolts.

At the interface where the cell frame (2100) and the solid oxide cell (2500) contact, a cell sealant (2300) is positioned. The cell sealant (2300) can be selected from at least one material in a group consisting of glass, mica, and glass-mica hybrid materials. However, the present invention is not limited to the materials used for sealing, and other materials or methods that achieve a sealing effect can also be employed.

On the upper side of the cell frame (2100), a fuel electrode sealant (2200) is formed. The fuel electrode sealant (2200) joins the cell frame (2100) and the interconnect (2700). A central opening is formed in the fuel electrode sealant (2200), accommodating the fuel electrode current collector (2600), which is positioned to contact one surface of the solid oxide cell (2500). Like the cell frame, fixing holes are formed along the edges of the fuel electrode sealant (2200).

The fuel electrode sealant (2200) can be selected from at least one material in a group consisting of glass, mica, and glass-mica hybrid materials. However, the present invention is not limited to the materials used for sealing, and other materials or methods that achieve a sealing effect can also be employed.

On one surface of the interconnect (2700) (see FIG. 9), an air flow channel is formed, while on the opposite surface (see FIG. 10), a fuel flow channel is formed. At the edges of the interconnect (2700), fuel inlet/outlet ports (715) are formed, and fixing holes (716) are provided at the corners to secure the stacked modules. Additionally, air inlets (717) are formed on other edges of the interconnect (2700).

Referring to FIG. 9, the air flow channel (720) is described. One end of the air flow channel (720) is connected to the air inlet (717). The air flow channel (720) guides air from the air inlet (717) to and from the air electrode of the solid oxide cell (2500). The opposite end of the air flow channel (720) opens to one side of the module (210), forming an open air outlet. As shown in FIG. 9, the air flow channel (720) opens to one side of the module (210) in an open structure. The air flow channel (720) is formed by machining a portion of one surface of the interconnect (2700), with ribs (721) and a first partition wall (722) protruding from the machined surface. The air flow channel can be formed as an elongated, unidirectional passage.

Referring to FIG. 10, the fuel flow channel (730) is described. The fuel flow channel (730) is formed on the rear surface of the interconnect (2700) and guides the flow of fuel to and from the fuel electrode of the solid oxide cell (2500). The fuel flow channel (730) includes a second partition wall (731), which is elongated in one direction to allow fuel entering from one fuel inlet (715) to exit through the opposite fuel outlet (715). The air flow channel and the fuel flow channel may be oriented in different directions (e.g., perpendicular to each other).

The cell frame (2100), fuel electrode sealant (2200), cell sealant (2300), air electrode current collector (2400), solid oxide cell (2500), fuel electrode current collector (2600), and interconnect (2700) collectively constitute a single unit cell (2000). The module (210) of the solid oxide stack (2) according to the second embodiment is formed by stacking multiple such unit cells (2000). Between each unit cell (2000), there is no sealing, and an insulator (2800) is positioned. The insulator (2800) may be formed by coating an insulating material on the interconnect (2700).

As shown in the comparison between FIG. 7 and FIG. 14, unlike conventional solid oxide stacks, the module (210) of the solid oxide stack (2) according to the second embodiment does not utilize an air electrode sealant.

It is important to note that the insulator (2800) is distinct from the air electrode sealant. Unlike sealants, the insulator (2800) is not permanently bonded to at least the adjacent unit cells (2000).

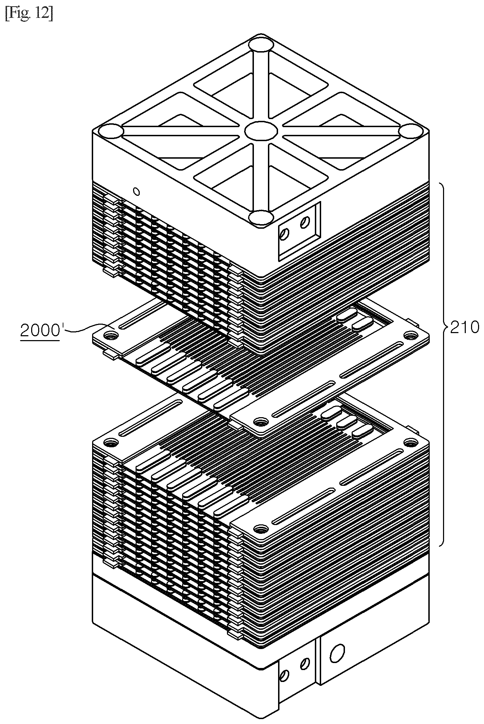

As such, as shown in FIG. 12, if at least one unit cell (2000') of the plurality of unit cells (2000) constituting the module (210) becomes aged or defective, it is possible to replace only the defective or aged unit cell (2000'). Specifically, if a unit cell (2000') becomes aged or defective, the fixing device securing the stacked stack can be removed, the aged or defective unit cell can be extracted, a new unit cell can be inserted, and the fixing device can be reassembled to complete the replacement.

This modular replacement capability significantly enhances the maintainability of the solid oxide stack (2) by allowing the selective replacement of individual components without the need to disassemble or replace the entire stack.

According to an embodiment of the present invention, the solid oxide stack includes a module formed by stacking multiple unit cells, with manifolds positioned at the top and bottom of the module. In an embodiment of the present invention, air is supplied through an air inlet formed in the manifold, delivered to the air electrode via vertically stacked air inlets of the unit cells, and discharged through an open air outlet on one side of the module after passing through the air electrode.

Since air is supplied through the air inlet in the manifold, the solid oxide stack according to an embodiment of the present invention does not require an external manifold. Moreover, with the air outlet open on one side of the module, the pressure of the air supply section and the chamber can be controlled using a single pressure control unit. This allows for two-point pressurization during operation, consisting of a pressure control unit for the fuel supply section (or steam supply section) and a pressure control unit for the chamber-air supply section. In contrast to the three-point pressurization method (fuel supply section or steam supply section, air supply section, and chamber) required for conventional sealed solid oxide stacks, the solid oxide stack of the present invention reduces the number of pressure control units by employing a two-point pressurization method (fuel supply section or steam supply section, and chamber-air supply section).

Accordingly, the solid oxide stack of the present invention minimizes auxiliary devices such as external manifolds or additional pressure control units required for stack operation, simplifying the system, reducing installation and maintenance costs, and enhancing system reliability and stability by lowering the likelihood of failure.

Additionally, the solid oxide stack of the present invention adopts an open air electrode (oxygen-generating electrode) structure, enabling removable unit cells without requiring an air electrode sealant, while maintaining stack performance. This makes it possible to easily replace only defective or aged cells when issues arise. Such modularity plays a crucial role in extending the stack's lifespan, allowing continued system operation by replacing individual components instead of the entire stack.

Moreover, the solid oxide stack of the present invention simplifies the sealing system from a conventional three-point sealing method (air electrode, fuel electrode, cell sealant) to a two-point sealing method (fuel electrode, cell sealant), reducing the amount of sealant used. This results in reduced material costs and significantly lowers assembly and maintenance costs due to the simplified structure.

The open air electrode structure also eliminates the need for a complex sealing system, naturally connecting the airflow to the external environment, thereby simplifying operation and assembly processes. Furthermore, it minimizes gas leakage issues, improving reliability during long-term operation.

The structure of the solid oxide stack according to the present invention is advantageous for modularization and scalability. The open air electrode structure allows multiple stacks to be easily connected, facilitating the implementation of large-scale systems. The simplified piping structure enables easy installation and operation in large commercial or industrial systems.

Additionally, by eliminating the need for an air electrode sealant, the solid oxide stack of the present invention reduces the risk of sealant damage in high-temperature environments. Furthermore, defective or aged cells can be individually replaced during stack operation, extending maintenance intervals and reducing costs.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A solid oxide stack comprising:
a module formed by stacking a plurality of unit cells and an upper manifold and a lower manifold respectively installed on the top and bottom of the module;
wherein each unit cell includes:
a cell frame having a central opening;
an air electrode current collector, a solid oxide cell, and a fuel electrode current collector sequentially stacked and seated within the central opening;
an interconnect formed on the cell frame, having an air flow channel on one surface and a fuel flow channel on the opposite surface;
a cell sealant positioned at the interface where the cell frame and the solid oxide cell contact; and
a fuel electrode sealant positioned at the interface where the cell frame and the interconnect contact;
wherein the module has an air inlet and a fuel inlet/outlet penetrating vertically, and
wherein air flows through the upper manifold or lower manifold into the air inlet, passes through the air flow channel, and is discharged through an air exhaust formed open on one side of the module.

2. The solid oxide stack of claim 1, wherein fuel or steam flows through the upper manifold or lower manifold into the fuel inlet/outlet, passes through the fuel flow channel, and is discharged through another fuel inlet/outlet to the upper manifold or lower manifold.

3. The solid oxide stack of claim 1, wherein no sealant is formed between adjacent modules within the stack.

4. The solid oxide stack of claim 1, wherein an insulator is positioned between adjacent unit cells.

5. The solid oxide stack of claim 1, further comprising a chamber accommodating the solid oxide stack therein.

6. The solid oxide stack of claim 5, wherein during operation, the stack performs pressurized operation by controlling the pressure at the fuel supply section and the chamber-air supply section.
